(19) Europäisches Patentamt
European Patent Office
Office européen des brevets

(11) Veröffentlichungsnummer: **0 408 499 A2**

# (12) EUROPÄISCHE PATENTANMELDUNG

(21) Anmeldenummer: 90810502.6

(22) Anmeldetag: 04.07.90

(51) Int. Cl.5: C09B 67/04, C08K 9/00

(30) Priorität: 13.07.89 CH 2631/89

(43) Veröffentlichungstag der Anmeldung: 16.01.91 Patentblatt 91/03

(84) Benannte Vertragsstaaten: DE FR GB

(71) Anmelder: CIBA-GEIGY AG
Klybeckstrasse 141
CH-4002 Basel(CH)

(72) Erfinder: Bäbler, Fridolin, Dr.
509 Stenning Drive
Hoctessin, Delaware 19707(US)

## (54) Verfahren zur Konditionierung organischer Pigmente.

(57) Verfahren zur Konditionierung organischer Pigmente durch Mahlung oder Knetung derselben in Gegenwart von 0,05 bis 25 Gew.-%, bezogen auf das zu mahlende Pigment, mindestens eines mikronisierten Wachses.

Das Verfahren, bei dem sich der Zusatz organischer Lösungsmittel erübrigt, liefert in einem einzigen Mahlvorgang Pigmente, die sich durch ihre hohe Dispergierbarkeit und hervorragende Beständigkeiten auszeichnen.

EP 0 408 499 A2

## VERFAHREN ZUR KONDITIONIERUNG ORGANISCHER PIGMENTE

Die Erfindung betrifft ein Verfahren zur Konditionierung organischer Pigmente unter Verwendung mikronisierter Wachse als Mahlhilfsmittel.

Bei ihrer Herstellung in grobkristalliner Form anfallende organische Pigmente müssen in der Regel einer Nachbehandlung oder sogenannten Konditionierung unterworfen werden. Unzählige Konditioniermethoden sind in Fachkreisen bekannt. Im allgemeinen handelt es sich um thermische Nachbehandlungen mit organischen Lösungsmitteln oder um Mahlungen mit geeigneten Mahlhilfsmitteln, gegebenenfalls in Gegenwart organischer Lösungsmittel. In EP-A 101 666 und im US-Patent 4 801 702 sind beispielsweise Konditionierverfahren beschrieben, bei denen bestimmte 1,2-Dihydroxyverbindungen bzw. Tricyclodecan- oder Tricyclodecenalkohole als Mahlhilfsmittel verwendet werden. Die damit erhaltenen Pigmente genügen allerdings nicht immer den heutigen Anforderungen der Technik. In bestimmten Applikationen zeigen sie beispielsweise eine unerwünschte Schleierbildung (fogging).

Im US-Patent 4 478 968 wird ein Konditionierverfahren beschrieben, bei welchem ein rohes organisches Pigment in Gegenwart eines thermoplastischen Harzes einer Trockenvorrnahlung und anschliessend einer basischen wässrigen Mahlung unterworfen wird.

Es wurde nun gefunden, dass bei Verwendung einer kleinen Menge (im Vergleich zur Pigmentmenge) mikronisierter Wachse überraschenderweise in einem einzigen Mahlvorgang sehr feinteilige, ausgezeichnet dispergierbare Pigmente mit sehr guten Pigmenteigenschaften hergestellt werden können.

Die vorliegende Erfindung betrifft demnach ein Verfahren zur Konditiervng organischer Pigmente durch Mählung oder Knetung derselben in Gegenwart von 0,05 bis 25 Gew.-%, bezogen auf das zu mahlende Pigment, mindestens eines mikronisierten Wachses.

Besonders geeignet sind mikronisierte Polyamid-, Polypropylen- und Polyethylenpolytetrafluorethylenwachse.

Vorzugsweise werden 2 bis 12 Gew.-% des mikronisierten Wachses, bezogen auf das zu mahlende Pigment, eingesetzt.

Bevorzugte mikronisierte Wachse sind

- mikronisierte Polyamidwachse mit einer maximalen Teilchengrösse von 15 µm und einer mittleren Teilchengrösse von 1 bis 5 µm, einer Dichte zwischen 0,90 und 1,1 g/cm$^3$ bei 25 °C sowie einem Schmelzpunkt über 130 °C;
- mikronisierte Polypropylenwachse und/oder Polypropylencopolymerwachse mit einer maximalen Teilchengrösse von 15 µm und einer mittleren Teilchengrösse von 1,5 bis 3,5 µm, einer Dichte zwischen 0,90 und 1,10 g/cm$^3$ bei 25 °C sowie einem Schmelzpunkt über 130 °C und
- mikronisierte Polyethylen- (hoher Dichte)/Polytetrafluorethylenwachse (Kombinationspolymere) mit einer maximalen Teilchengrösse von 15 um und einer mittleren Teilchengrösse von 1,5 bis 4,0 µm, einer Dichte zwischen 0,95 und 1,15 g/cm$^3$ bei 25 °C sowie einem Schmelzpunkt über 100 °C.

Solche mikronisierte Wachse sind bekannt und im Handel erhältlich.

Wässrige Mahlung und insbesondere Trockensalzmahlung nach üblichen Methoden sind bevorzugt. Vorzugsweise wird kein organisches Lösungsmittel zugesetzt.

Bei Mahlungen übliche Zusätze, wie oberflächenaktive Mittel und/oder organische Lösungsmittel, können beim erfindungsgemässen Verfahren gegebenenfalls zur Erzielung ganz besonderer Eigenschaften auch verwendet werden. Normalerweise kann man allerdings von ihrem Einsatz absehen.

Bei der Trockensalzmahlung werden vorzugsweise NaCl, $CaCl_2$, $Na_2SO_4$ oder $Al_2(SO_4)_3$ mit oder ohne Kristallwasser verwendet. Auf 1-150 Gewichtsteile Salz werden zweckmässig 10-50 Gewichtsteile Pigment verwendet. Die Aufarbeitung erfolgt nach an sich bekannter Methode, indem das Pigment/Salzgemisch von den Mahlkörpem getrennt, dann in Wasser gegeben wird und die erhaltene Pigmentsuspension danach abfiltriert wird. Gegebenenfalls wird vor der Filtration des Pigmentes die Pigmentsuspension sauer oder alkalisch gestellt und das Pigment vor der Isolation 1 bis 20 Stunden bei 20 bis 100 °C verrührt.

Die erfindungsgemäss einzusetzenden mikronisierten Wachse wirken auch bei der wässrigen Mahlung ausgezeichnet als Mahlhilfsmittel, wobei die zu mahlende Pigmentsuspension in der Regel neutral gehalten wird. Eine Verschiebung des pH-Wertes in den sauren oder alkalischen Bereich ist allerdings, wenn von Vorteil, nicht ausgeschlossen.

Obwohl die erfindungsgemäss einzusetzenden mikronisierten Wachse selbst als Texturschutzmittel wirken, ist es durchaus möglich weitere Texturschutzmittel einzusetzen, um die applikatorischen Eigenschaften der gemahlenen Pigmente zusätzlich günstig zu beeinflussen. Solche Zusätze kann man in Mengen von 0,05-20, bevorzugt 1-10 Gew.-%, bezogen auf das zu mahlende Pigment oder Pigmentgemisch, vor, während oder nach dem Mahlvorgang zugeben.

Geeignete Texturschutzmittel sind beispielsweise Fettsäuren mit mindestens 12 C-Atomen, wie Stearinsäure oder Behensäure, deren Amide, Salze oder Ester, wie Magnesiumstearat, Zinkstearat, Aluminiumstearat oder Magnesiumbehenat, ferner quatemäre Ammoniumverbindungen, wie Tri-($C_1$-$C_4$)-alkylbenzylammoniumsalze, ferner Weichmacher, wie epoxidiertes Sojabohnenöl, Wachse, wie Polyethylenwachs, Harzsäuren, wie Abietinsäure, Kolophoniumseife, hydriertes oder dimerisiertes Kolophonium, $C_{12}$-$C_{18}$-Paraffindisulfonsäuren, Alkylphenole oder Alkohole, wie Stearylalkohol, ferner Lauryl- oder Stearylarnin, sowie aliphatische 1,2-Diole.

Bevorzugte Texturschutzmittel sind Lauryl- oder Stearylamin, Stearinsäure, deren Amide, Salze oder Ester, epoxidiertes Sojabohnenöl, Wachse, Harzsäuren oder aliphatische 1,2-Diole.

In der Regel wird das erfindungsgemässe Mahlverfahren in Abwesenheit von weiteren organischen Lösungsmitteln durchgefüm. Geringe Mengen davon können jedoch geduldet werden, soweit sie das Verfahren nicht beeinträchtigen.

Man mahlt oder knetet solange, bis das Pigment in der gewünschten transparenten, farbstarken Form vorliegt. In der Regel dauert dies je nach Mahl- bzw. Knetapparatur, Mahlansatz, Umlaufgeschwindigkeit, Pigment und Zusätzen $\frac{1}{4}$ bis 96 Stunden. Die benötigte Mahldauer ist von Fall zu Fall leicht zu ermitteln.

Als Mahl- oder Knetapparatur kann jede Vorrichtung verwendet werden, die es erlaubt, das Pigment und allfällige Zusätze, wie beispielsweise einen Trägerstoff, im trockenen Zustand oder in einem flüssigen Medium intensiven mechanischen Kraftwirkungen zu unterwerfen. Derartige Apparaturen sind in grösserer Zahl bekannt. Sie beruhen beispielsweise auf dem Prinzip eines in flüssigem Medium erzeugten grossen Geschwindigkeitsgradienten oder einer plötzlichen Richtungsänderung, oder insbesondere auf Aufprallwirkung oder gegenseitiger Reibung von Mahlkörpern, wie Metall-, Glasoder Porzellankugeln, Kunststoffgranulaten oder Sandkörnern, die durch Rotation des Gefässes oder noch wirksamer durch Schwingungserzeuger oder rührartige Vorrichtungen, wie beispielsweise bei den Glasperlmühlen, in Bewegung gesetzt werden.

Die Mahl- bzw. Knettemperatur ist innerhalb technisch vernünftiger Grenzen nicht kritisch. Zweckmässig wird man die Mah lung oder Knetung bei Temperaturen zwischen 5 und 90 °C, vorzugsweise bei 15 bis 60 °C, durchführen.

Organische Pigmente, die nach dem erfindungsgemässen Verfahren konditioniert werden können, sind beispielsweise Pigmente der Azo-, Diketopyrtolopytrol-, Perylen-, Chinacridon-, Phthalocyanin-, Perinon-, Chinophthalon-, Isoindolinon-, Isoindolin-, Dioxazin-, Anthrachinon-, Thioindigo-, Methin-, Azomethin- oder Metallkomplexreihe. Bei den Pigmenten der Azomethin-, Methin- und Phthalocyaninreihe kommen sowohl die metallfreien als auch die Metallkomplexe davon in Betracht.

Bevorzugt werden Pigmente der Azo-, Diketopyrtolopyrtol-, Perylen-, Phthalocyanin-, Isoindolinonreihe sowie die Metallkomplexe und insbesondere die Pigmente der Chinacridon-, Anthrachinon-, Diketopyrtolopyrtol- und Dioxazinreihe nach dem erfindungsgemässen Verfahren konditioniert.

Neben reinen organischen Pigmenten ist es auch möglich, Pigmentmischungen einzusetzen. Dabei können Pigmentlegierungen, beispielsweise wie in EP-A 42816 beschrieben, oder in geeigneten Fällen feste Lösungen von Pigmenten ("pigment solutions")hergestellt werden.

Mikronisierte Polypropylen- und Polyamidwachse wirken so stark als Mahlhilfsmittel, dass bei polymorphen Pigmenten in einzelnen Fällen während des Mahlprozesses ein Kristallmodifikationswechsel eintreten kann.

Die erfindungsgemäss erhaltenen Pigmente eignen sich zum Pigmentieren von hochmolekularem organischem Material, z.B. Celluloseethern und -estern, wie Ethylcellulose, Acerylcellulose, Nitrocellulose, Polyamiden bzw. Polyurethanen oder Polyestern, natürlichen Harzen oder Kunstharzen, insbesondere Harnstoff- und Melamin-Formaldehydharzen, Alkydharzen, Phenoplasten, Polycarbonaten, Polyolefinen, wie Polyethylen und Polypropylen, ferner Polystyrol, Polyvinylchlorid, Polyacrylnitril, Polyacrylsäureestern, thermoplastischen oder härtbaren Acrylharzen, Gumini, Gasein, Silikon und Silikonharzen, einzeln oder in Mischungen. Die erwähnten hochmolekularen Verbindungen können als plastische Massen, Schmelzen oder in Form von Spinnlösungen, Lacken oder Druckfarben vorliegen. Je nach Verwendungszweck erweist es sich als vorteilhaft, die Pigmente als Toner oder in Form von Präparaten zu verwenden.

Das mit erfindungsgemäss konditionierten Pigmenten gefärbte hochmolekulare organische Material zeichnet sich durch sehr reine und gleichmässige Nuancen, hohe Farbstärke und hohen Glanz, hohe Licht- und Wetterechtheit und hohe Kitzebeständigkeit aus.

Das erfindungsgemässe Verfahren, bei welchem nur mikronisierte Polypropylen- oder Polyamidwachse eingesetzt werden, liefert Pigmente, die sich bevorzugt zum Pigmentieren von Kunststoffen, wie PVC, Polyoleline und Ingenieurwerkstoffe (engineering plastics) eignen. Pigmente, die nach dem erfindungsgemässen Verfahren unter Verwendung von Polyethylen/Polytetrafluorethylen konditioniert werden, sind für Kunststoffe und insbesondere für Applikationen in lösungsmittelhaltigen und wässrigen Lacken geeignet.

Die erfindungsgemäss hergestellten Pigmente zeigen oft ein vermindertes Staubverhalten, sind ausgezeichnet dispergierbar und foggingfrei. Hitzestabilität und Verzugsverhalten bei der Einarbeitung der erfindungsgemäss hergestellten Pigmente in thermoplastischen Polymeren werden positiv beeinflusst.

Die nachfolgenden Beispiele erläutern die Erfindung:

Beispiel 1:

In eine Kugelmühle mit einem Inhalt von ca. 1 Liter, enthaltend 1,5 kg Stahlkugeln (Ø) = 1,2 cm) und 150 g Nägel (Länge 3 cm) als Mahlkörper, werden 5,1 g rohes Dioxazinpigment der Formel

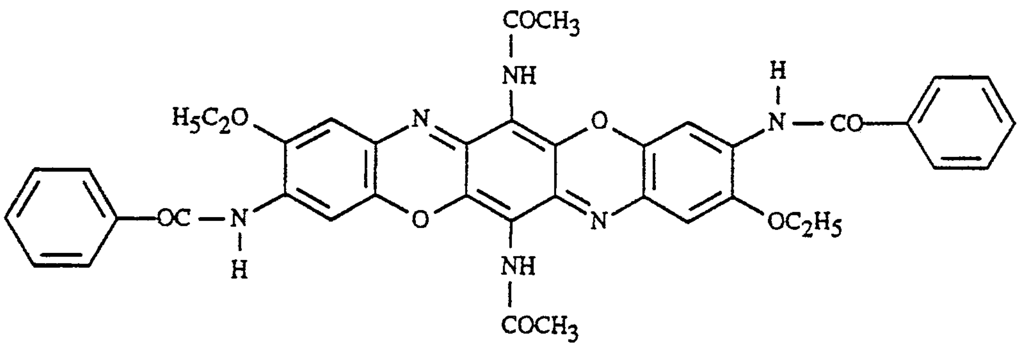

,

0,5g mikronisiertes Polypropylenpulver MICROPRO 400® (FLUORIDIENNE POLYMERES SA, B-1050, Bruxelles) und 20 g Aluminiumsulfat [$Al_2(SO_4)_3$ 15-18 $H_2O$] gegeben. Die gut verschlossene Mühle wird während 6 Stunden auf einer Rollbank bei Raumtemperatur gerollt. Danach wird das Mahlmedium von den Mahlkörpern abgetrennt und in einer Lösung von 2,75 ml konzentrierter Schwefelsäure in 500 ml Wasser während 90 Minuten bei 70-80°C gerührt. Das Pigment wird abfiltriert, der Presskuchen wird mit heissem Wasser neutral und salzfrei gewaschen, im Vakuumtrockenschrank bei 80°C getrocknet, und die erhaltene Ware wird gepulvert. Man erhält 5,3 g eines violetten Pigmentpulvers, das beim Einarbeiten in Kunststoffe und Lacke sehr farbstarke violette Färbungen mit ausgezeichneten Hitze- und Lichtbeständigkeiten ergibt.

Beispiel 2:

Verfährt man analog wie in Beispiel 1 beschrieben, verwendet aber anstelle des Dioxazinpigments das anthrachinoide Pigment Indanthronblau der Formel

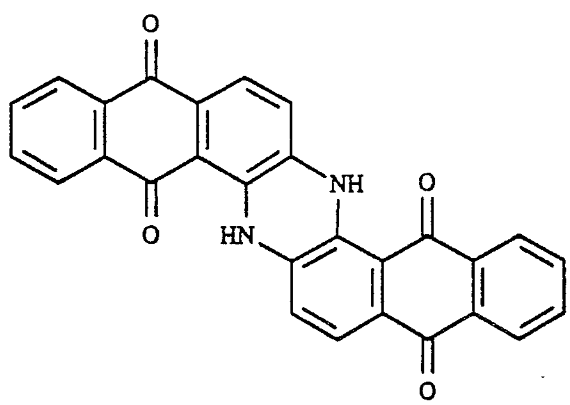

,

so erhält man ein blaues Pigment, welches bei einwandfreier Dispergierung gegenüber der rohen Ausgangsform wesentlich farbstärkere Färbungen beim Einarbeiten in Kunststoffe und Lacke ergibt. Die Färbungen sind zudem licht-, wetter-, hitze-, migrationsbeständig und foggingfrei.

Beispiel 3:

Verfährt man analog wie in Beispiel 1 beschrieben, verwendet aber anstelle des Dioxazinpigments das Mischsynthese-Diketopyrrolopyrrol-Pigment bestehend aus 99 % 1,4-Diketo-3,6-diphenyl-pyrrolo-[3,4c]-pyrrol und 1 % 1,4-Diketo-3,6-bis-(4-chlorphenyl)-pyrrolo-[3,4-c]-pyrrol, so erhält man ein rotes Pigment, welches bei einwandfreier Dispergiervng gegenüber der rohen Ausgangsware wesentlich farbstärkere gelbstichig rote Färbungen beim Einarbeiten in Kunststoffe und Lacke ergibt.

Beispiel 4:

In einer 500 ml fassenden Glasperimühle mit einem Durchmesser von 8 cm werden 9,0 g Bisazokondensationspigment der Formel

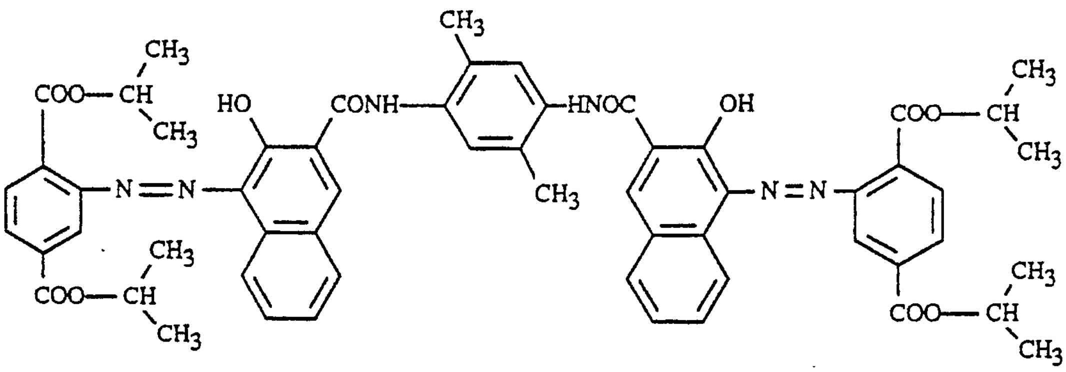
,

1,0 g mikronisiertes Polypropylenpulver MICROPRO 400®, 125 g Wasser und 400g Glasperlen mit einem Durchmesser von 3,5-4,0 mm während 6 Stunden bei 320 U-in. unter Wasserkühlung gerührt, wobei die Umlaufgeschwindigkeit des verwendeten Metallflügelrührers mit einem Durchmesser von 5,5 cm 0,92 m/sec beträgt. Die Pigmentsuspension wird von den Glasperlen, welche mit Wasser nachgewaschen werden, abgetrennt, dann abfiltriert. Man trocknet den Presskuchen bei 70-80 °C im Vakuumtrockenschrank und erhält 9,3 g braunes Pigment, welches nach dem Pulvern bei einwandfreier Dispergierung in Kunststoffen und Lacken gegenüber der rohen Ausgangsware viel farbstärkere Färbungen mit ausgezeichneten Beständigkeiten ergibt.

Beispiel 5:

Verfährt man analog wie in Beispiel 4 beschrieben, verwendet aber anstelle des braunen Disazokondensationsproduktes, das scharlachfarbige Disazokondensationspigment der Formel

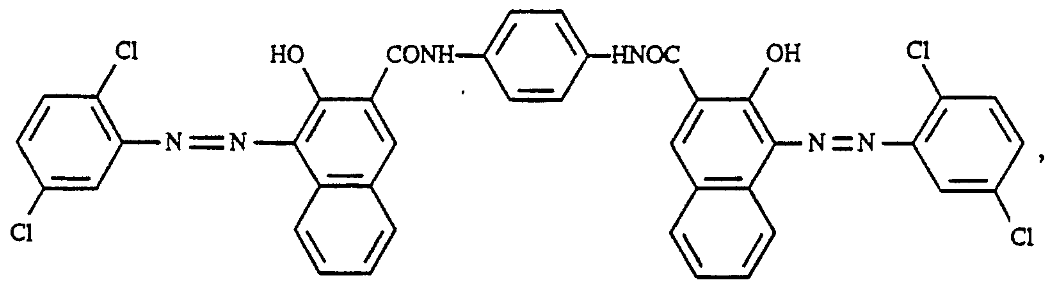
,

so erhält man ein Pigment, welches bei einwandfreier Dispergierung in Kunststoffen und Lacken sehr farbstarke gelbstichig rote Färbungen ergibt.

Beispiel 6:

Verfährt man analog wie in Beispiel 1 beschrieben, verwendet aber anstelle des Dioxazinpigments die rohe Form des Perylenpigmentes der Formel

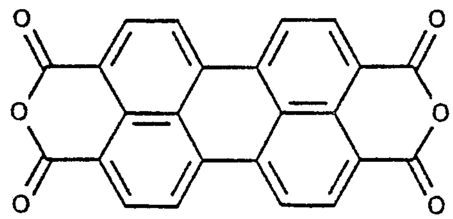

so erhält man ein rotes Pigment, welches bei einwandfreier Dispergierung in Kunststoffen und Lacken gegenüber der rohen Ausgangsform viel farbstärkere, reinere Färbungen mit ausgezeichneten Beständigkeiten ergibt.

Beispiel 7:

Verfährt man analog wie in Beispiel 3 beschrieben, verwendet aber anstelle des dort beschriebenen Diketopyrrolopyrrol-Pigments 1,4-Diketo-3,6-bis-(4-chlorphenyl)-pyrrolo-[3,4-c]-pyrrol, so erhält man ein rotes Pigment, welches bei einwandfreier Dispergierung in Kunststoffen und Lacken gegenüber der rohen Ausgangsform viel farbstärkere, reinere Färbungen mit ausgezeichneten Beständigkeiten ergibt.

Beispiel 8:

Verfährt man analog wie in Beispiel 2 beschrieben, verwendet aber anstelle von 0,5 g des mikronisierten Polypropylens 1,0 g des mikronisierten Polyethylen (hoher Dichte)/Polytetrafluorethylen-Kombinationspolymeren AQUA POLYFLOW 411® (FLUORIDIENNE POLYMERES SA, B-1050 Bruxelles), so erhält man ein blaues Pigment mit ebensoguten Eigenschaften.

Beispiel 9:

Verfährt man analog wie in Beispiel 1 beschrieben, verwendet aber anstelle von 0,5 g des mikronisierten Polypropylens 0,3 g des mikronisierten Polyethylen (hoher Dichte)Polytetrafluorethylen-Kombinationspolymeren AQUA POLYFLOW 411®, so erhält man ein violettes Pigment mit ebensoguten Eigenschaften. Es lässt sich besonders vorteilhaft in wässrige Automobillacke aber auch in Kunststoffe und in Druckfarben applizieren, wo es sehr farbstarke Färbungen hoher Reinheit und mit ausgezeichneten Beständigkeiten ergibt.

Beispiel 10:

81 g rohes β-Chinacridonpigment, 9 g mikronisiertes Polypropylenpulver MICROPRO 400® und 700 ml Wasser werden in einem Becherglas zu einer homogenen Suspension verrührt. In einer DYNO-Mühle, Typ KDL® der Firma Willy A. Bachofen, Basel, versehen mit einem 600 ml fassenden Stahlmahlbehälter, gefüllt mit 480-510 ml Glasperlen mit einem Durchmesser von ca. 1 mm, wird die Pigmentsuspension bei einer Rotor-Drehgeschwindigkeit von 3000 U/Min und einer Pumpenfördermenge von 400 ml/Min. intensiv bei 20-25 °C während 80 Minuten gemahlen. Danach wird die Pigmentsuspension abfiltriert, der Presskuchen wird mit Wasser gewaschen, im Vakuumtrockenschrank bei 70-80 °C getrocknet und die erhaltene Ware wird gepulvert. Man erhält ein Pigment, welches beim Einarbeiten in Kunststoffe und Lacke gegenüber der Ausgangsform viel farbstärkere, reinere, violette Färbungen ergibt. Das Pigment weist eine ausgezeichnete Dispergierbarkeit und sehr gute Hitze-, Licht-, Wetter- und Migrationsbeständigkeiten auf.

Beispiel 11:

In einen 500 ml fassenden Laborkneter werden 27 g rohes Indanthronblau, 135 g Kochsalz und 1,9 g des mikronisierten Polyethylen- (hoher Dichte)Polytetrafluorethylen-Kombinationspolymeren AQUA POLYFLOW 411® und 55 mi Diacetonalkohol gegeben. Ohne Aussenkühlung wird die Masse während 7 Stunden geknetet, wobei sich eine Temperatur der Knetmasse von 37° C einstellt. Danach wird die Knetmasse in 21 Wasser ausgetragen und während 16 Stunden bei Raumtemperatur gerührt. Das Pigment wird abfiltriert, der Presskuchen wird mit Wasser salz- und lösungsmittelfrei gewaschen, im Vakuumtrockenschrank bei 70-80° C getrocknet und die erhaltene Ware wird gepulvert. Man erhält ein Pigment, welches sich mit einwandfreier Dispergierbärkeit in Kunststoffe und Lacke, insbesondere wasserhaltige Lacke, einarbeiten lässt und sehr farbstarke, reine Färbungen sehr hoher Licht-, Wetter-, Hitze-und Migrationsbeständigkeiten ergibt.

Beispiel 12:

Verfährt man analog wie in Beispiel 1 beschrieben, verwendet aber anstelle des Dioxazinpigments eine Pigmentmischung, bestehend aus 2,7 g 2,9-Dichlorchinacridon und 1,8 g 1,4-Dlketo-3,6-bis-(4-chlorphenyl)-pyrrolo-[3,4-c]-pyrrol, so erhält man eine, wie im US-Patent 4 810 304 beschriebene feste Pigmentlösung, welche sich mit einwandfreier Dispergierung in Kunststoffe und Lacke einarbeiten lässt und farbstarke blaustichig rote Färbungen mit ausgezeichneten Hitze-, Licht- und Migrationsbeständigkeiten ergibt.

Beispiel 13:

237 g eines wässrigen Presskuchens (80 g Trockengewicht) der rohen Form des Isoindolinonpigmentes der Formel

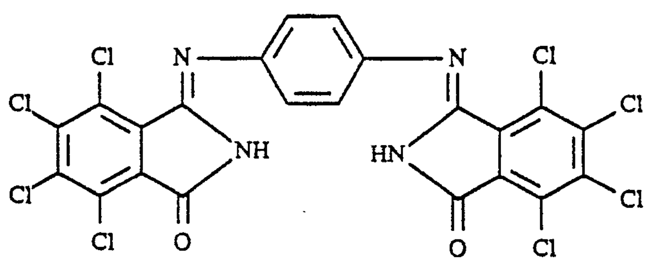

,

6,0 g mikronisiertes Polypropylenpulver MICROPRO 400®, suspendiert in einer Mischung von 20 ml Wasser und 0,5 ml Diacetonalkohol, und 630 mi Wasser werden in einem Becherglas zu einer homogenen Suspension verrührt. In einer DYNO-Mühle, Tvp KDL® der Firma Willy A. Bachofen, Basel, versehen mit einem 600 mi fassenden Mahlbehälter, gefüllt mit 480-510 ml Glasperlen mit einem Durchmesser von ca. 1 mm, wird die Pigmentsuspension bei einer Rotor-Drehgeschwindigkeit von 3000 UMin. und einer Pumpenfördermenge von 400 ml/Min. intensiv bei 20-25° C während 70 Minuten gemahlen. Danach wird die Pigmentsuspension abfiltriert, der Presskuchen wird mit Wasser gewaschen, im Vakuumtrockenschrahk bei 70-80° C getrocknet und die erhaltene Ware wird gepulvert. Man erhält ein Pigment, welches sich mit einwandfreier Dispergierbarkeit in Kunststoffe und Lacke einarbeiten lässt und sehr farbstarke, reine, sehr transparente gelbe Färbungen mit ausgezeichneten Migrations-, Hitze-, Licht- und Wettechtheiten ergibt.

Beispiel 14:

8,1 g grobkristallines Kupferphthalocyanin und 0,9 g mikronisiertes Polypropylenpulver MICROPRO 400® werden zusammen in einem 250 ml fassenden Becherglas mit einem Durchmesser von 6cm in 40 g Wasser mit 90 mi Sand (Ottawa-Sand mit einem Durchmesser von 2-3 mm) und einem Nylon-Scheibenrührer mit einem Durchmesser von 4,5 cm bei einer Rührgeschwindigkeit von 2000 UMin. mit fliessendem Wasser von ca. 8° C als Aussenkühlung während 3 Stunden gemahlen. Die Umlaufgeschwindigkeit des Nylon-Scheibenrührers beträgt ca. 4,7 m/sec. Die gemahlene Pigmentsuspension wird vom Sand, welcher

mit Wasser nachgewaschen wird, abgetrennt, dann abfiltriert. Man trocknet den Presskuchen bei 70-80° C im Vakuumtrockenschrank und pulverisiert das Trockengut. Man erhält 8,3 g blaues Pigment, welches sich mit einwandfreier Dispergierbarkeit in Lacke und Kunststoffe einarbeiten lässt und sehr farbstarke, reine, blaue transparente Färbungen mit ausgezeichneten Beständigkeiten ergibt.

Beispiel 15:

Verfährt man analog wie in Beispiel 13 beschrieben, verwendet aber anstelle von 80 g nur 68 g des dort beschriebenen gelben Isoindolinonpigmentes jedoch zusammen mit 12 g des orangen Isoindolinonpigmentes der Formel

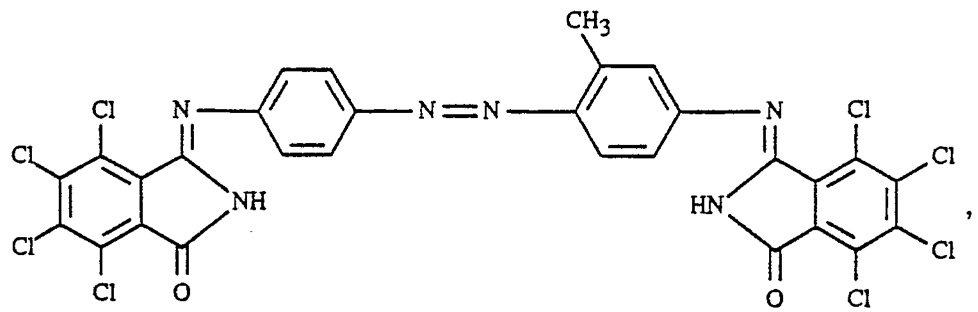

so erhält man eine wie in EP-A 314 621 beschriebene feste Pigmentlösung, welche sich mit einwandfreier Dispergierbarkeit in Kunststoffe und Lacke einarbeiten lässt und farbstarke rotstichig gelbe Färbungen mit ausgezeichneten Beständigkeiten ergibt.

Beispiel 16:

Verfährt man analog wie in Beispiel 1 beschrieben, verwendet aber anstelle des Dioxazinpigmentes das Metallkomplexpigment der Formel

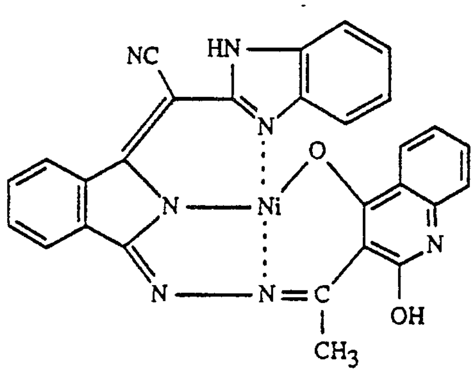

und anstelle von MICROPRO 400® das mikronisierte Polyamidwachs LANCO-WAX A1601® (Langer & Co, D-2863 Ritterhude), so erhält man ein rotes Pigment, welches sich mit einwandfreier Dispergierbarkeit in engineering plastics einarbeiten lässt und gegenüber der rohen Ausgangsform viel farbstärkere rote Färbungen ausgezeichneter Hitze- und Lichtbeständigkeiten ergibt.

Beispiel 17:

Eine Mischung von 130 g Steatitkugeln von 8 mm Durchmesser, 47,5 g Alkydmelamineinbrennlack, bestehend aus 60 g Alkydharz ®BECKOSOL 27-320 (Reichhold Chemie AG) 60%-ig in Xylol, 36 g Melaminharz ®SUPER-BECKAMIN 13-501 (Reichhold Chemie AG) 50%-ig in Xylol:Butanol (2:1-Gemisch),

2g Xylol und 2 g Ethylenglykolmonomethylether, und 2,5 g des nach Beispiel 11 erhaltenen Pigmentes werden in einer 200 ml fassenden Glasflasche mit "Twist-off"-Verschluss während 120 Stunden auf einem Rollgestell dispergiert. Nach Abtrennen der Steatitkugeln werden 2,4 g der so dispergierten Volltonmischung mit 60 g Titandioxid ®KRONOS RN 59 (Kronos Titan GmbH) und weiteren 24,0 g des obigen Alkydmelamineinbrennlacks vermischt. Das erhaltene Gemisch wird auf Aluminiumbleche gespritzt und anschliessend während 30 Minuten bei 130 °C eingebrannt. Man erhält blaue Ausfärbungen mit ausgezeichneten Beständigkeiten.

Beispiel 18:

Eine Mischung von 130 g Steatitkugeln (Ø) = 8 mm)
45,5 g eines thermohärtenden Acryllacks, bestehend aus
41,3 g Acrylharz ®VIACRYL VC 373, 60% (VIANOVA Kunstharz AG),
16,3 g Melaminharz ®MAPRENAL TTX, 55 % (HOECHST AG),
32,8 g Xylol,
4,6 g Ethylglykolacetat,
2,0 g Butylacetat und
1,0 g ®Silikonöl A, 1 % in Xylol (BAYER AG), und
2,5 g des nach Beispiel 9 erhaltenen Dioxazinpigmentes
werden in einer 200 ml Glasflasche mit "Twist-off"-Verschluss während 72 Stunden auf einem Rollgestell dispergiert. Nach Abtrennen der Steatitkugeln werden 8,0 g der so dispergierten Volltonmischung, 0,6 g Aluminium-Paste ®ALCOA, (60-65 % Al-Gehalt, Aluminium Corp. of America), 1,0 g Methylethylketon und 18,4 g des oben erwähnten thermohärtenden Acryllacks gut vermischt, das erhaltene Gemisch wird auf Aluminiumbleche gespritzt und anschliessend während 30 Minuten bei 130 °C eingebrannL Man erhält sehr farbstarke violette Metalleffektlackiervngen mit ausgezeichneten Beständigkeiten.

Beispiel 19:

Eine Mischung von 1,0 g des nach Beispiel 7 erhaltenen Pigmentes, 1,0 g Antioxidans (IRGANOX® 1010, CIBA-GEIGY AG) und 1000g Polyethylen-HD·Granulat (®VESTOLEN A 60-16, HUELS) wird während 15 Minuten in einer Glasflasche auf einer Rollbänk vorgemischt. Danach wird die Mischung in zwei Passagen auf einem Einwellenextruder extrudiert, das so erhaltene Granulat auf der Spritzgussmaschine (Allround Aarburg 200) bei 220 °C zu Platten verspritzt und 5 Minuten bei 1 80 °C nachgepresst. Die Pressplatten weisen farbstarke rote Nuancen mit ausgezeichneten Beständigkeiten auf.

Beispiel 20:

0,6 g der gemäss Beispiel 12 erhaltenen festen Pigmentlösung werden mit 67 g Polyvinylchlorid, 33 g Diocrylphthalat, 2 g Dibutylzinndilaurat und 2 g Titandioxid vermischt und auf einem Walzenstuhl während 15 Minuten bei 160 °C zu einer dünnen Folie verarbeitet. Die so erzeugte blaustichig rote PVC-Folie ist sehr farbstark, migrations- und lichtbeständig.

Beispiel 21:

1000 g Polypropylengranulat (®DAPLEN PT-55, Chemie LINZ) und 20 g eines 50%-igen Pigmentpräparates, bestehend aus 10 g des nach Beispiel 13 erhaltenen Pigmentes und 10 g Mg-Behenat, werden in einer Mischtrommel intensiv vermischt. Das so behandelte Granulat wird bei 260 bis 285 °C nach dem Schmelzspinnverfahren versponnen. Man erhält gelb gefärbte Fasern mit sehr guten Licht- und textilen Echtheiten.

Beispiel 22:

100 g Polycarbonatgranulat (MAKROLON 2800® der Firma BAYER), und 0,2 g des nach Beispiel 16

erhaltenen Metallkomplexpigments werden während 20 Minuten in einer 500 ml-Glasflasche auf einem Rollblock vorgemischt. Danach wird die Mischung auf einem Einwellenextruder zu einem Band extrudiert. Man erhält ein rotes Kunststoffband, welches ausgezeichnete Hitze- und Lichtbeständigkeiten aufweist.

Beispiel 23:

Verfährt man analog wie in Beispiel 22 beschrieben, verwendet aber anstelle von Polycarbonat das Polymerengemisch aus 50 % Polycarbonat und 50 % Polybutylenterephthalat XENOY 101 (General Electric Plastics BU, 4600 Bergen ob Zoon, Holland) so erhält man ein rotes Kunststoffband mit analog guten Eigenschaften.

Beispiel 24:

In eine Kugelmühle mit einem Inhalt von ca. 1 Liter, enthaltend 1,5 kg Stahlkugeln (Ø = 1,2 cm) und 150 g Nägel (Länge 3 cm)als Mahlkörper, werden 45 g rohes γ-Chinacridon der Formel

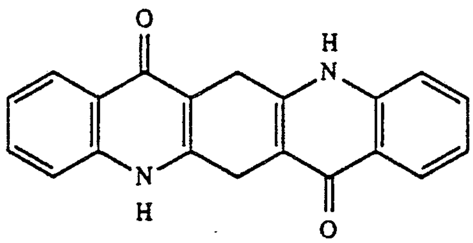

,

5 g mikronisiertes Polypropylencopolymerwachs LANCO-WAX CP 1481 SF® (Langer & Co., d-2863 Ritterhude) und 5 g wasserfreies $Na_2SO_4$ gegeben. Die gut verschlossene Mühle wird während 96 Stunden auf einer Rollbank bei Raumtemperatur gerollt. Danch wird das Mahlmedium von den Mahlkörpern abgetrennt und in einer Lösung von 2.75 ml konzentrierter Schwefelsäure in 500 ml Wasser während 90 Minuten bei 70-80 °C gerührt. Das Pigment wird abfiltriert, der Presskuchen mit heissem Wasser neutral und salzfrei gewaschen, im Vakuumtrockenschrank bei 80 °C getrocknet und die erhaltene Ware wird gepulvert. Man erhält 43,5 g eines roten Pigmentpulvers, das beim Einarbeiten in Kunststoffe und Lacke sehr farbstarke rote Färbungen mit ausgezeichneten Hitze-, Wetter-und Lichtbeständigkeiten ergibt.

Beispiel 25:

Verfährt man analog wie in Beispiel 24 beschrieben, verwendet aber anstelle von γ-Chinacridon rohres 2,9-Dichlorchinacridon der Formel

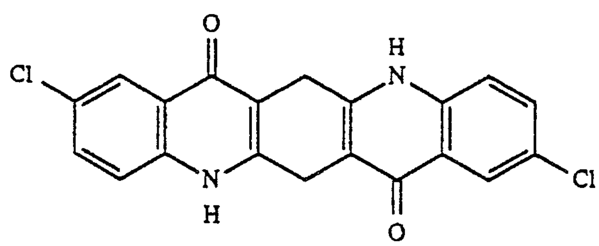

,

so erhält man ein blaustichig rotes Pigment mit ebenso guten Eigenschaften.

## Ansprüche

1. Verfahren zur Konditionierung organischer Pigmente durch Mahlung oder Knetung derselben in Gegenwart von 0,05 bis 25 Gew.-%, bezogen auf das zu mahlende Pigment, mindestens eines mikronisierten Wachses.

2. Verfahren gemäss Anspruch 1, dadurch gekennzeichnet, dass 2 bis 12 Gew.-% des mikronisierten Wachses, bezogen auf das zu mahlende Pigment, eingesetzt werden.

3. Verfahren gemäss Anspruch 1, dadurch gekennzeichnet, dass mindestens ein mikronisiertes Wachs ausgewählt aus der Gruppe bestehend aus Polyamidwachs, Polypropylenwachs und Polyethylen/Polytetrafluorethylenwachs, eingesetzt wird.

4. Verfahren gemäss Anspruch 1, dadurch gekennzeichnet, dass ein mikronisiertes Polyamidwachs mit einer maximalen Teilchengrösse von 15 µm und einer mittleren Teilchengrösse von 1 bis 5 µm, einer Dichte zwischen 0,90 und 1,10 $g/cm^3$ bei 25° C sowie einem Schmelzpunkt über 130° C eingesetzt wird.

5. Verfahren gemäss Anspruch 1, dadurch gekennzeichnet, dass ein mikronisiertes Polypropylenwachs und/oder Polypropylencopolymerwachs mit einer maximalen Teilchengrösse von 15 µm und einer mittleren Teilchengrösse von 1,5 bis 3,5 µm, einer Dichte zwischen 0,90 und 1,10 $g/cm^3$ bei 25° C sowie einem Schmelzpunkt über 130° C eingesetzt wird.

6. Verfahren gemäss Anspruch 1, dadurch gekennzeichnet, dass ein mikronisiertes Polyethylen (hoher Dichte)/Polytetrafluorethylenwachs mit einer maximalen Teilchengrösse von 15 µm und einer mittleren Teilchengrösse von 1,5 bis 4,0 µm, einer Dichte zwischen 0,95 und 1,15 $g/cm^3$ bei 25° C sowie einem Schmelzpunkt über 100° C eingesetzt wird.

7. Verfahren gemäss Anspruch 1, dadurch gekennzeichnet, dass die Mahlung eine Trockensalzmahlung ist.

8. Verfahren gemäss Anspruch 1, dadurch gekennzeichnet, dass die Mahlung eine wässrige Mahlung ist.

9. Verfahren gemäss Anspruch 1, dadurch gekennzeichnet, dass man zusätzlich zum mikronisierten Wachs ein Texturschutzmittel verwendet.

10. Verfahren gemäss Anspruch 9, dadurch gekennzeichnet, dass man als Texturschutzmittel Lauryl- oder Stearylamin, Stearinsäure, deren Amide, Salze oder Ester, epoxidiertes Sojabohnenöl, Wachse, Harzsäuren oder ein aliphatisches 1,2-Diol verwendet.

11. Verfahren gemäss Anspruch 1, dadurch gekennzeichnet, dass man die Mahlung oder Knetung zwischen 5 und 90° C durchführt.

12. Verfahren gemäss Anspruch 1, dadurch gekennzeichnet, dass die zu konditionierenden Pigmente der Azo-, Diketopyrrolopyrrol-, Perylen-, Chinacridon-, Phthalocyanin-, Perinon-, Chinophthalon-, Isoindolinon-, Isoindolin-, Dioxazin-, Anthrachinon-, Thioindigo-, Methin-, Azomethin- oder Metallkomplexreihe angehören.

13. Verfahren gemäss Anspruch 12, dadurch gekennzeichnet, dass die Pigmente der Azo-, Diketopyrrolopyrrol-, Perylen-, Phthalocyanin-, Isoindolinon-, Metallkomplex-, Chinacridon-, Anthrachinon- oder Dioxazinreihe angehören.

14. Verfahren gemäss Anspruch 12, dadurch gekennzeichnet, dass die Pigmente der Chinacridon-, Anthrachinon-, Diketopyrrolopyrrol oder Dioxazinreihe angehören.

15. Verwendung der gemäss Anspruch 1 erhaltenen Pigmente zum Pigmentieren von hochmolekularem organischem Material.